## Europäisches Patentamt
## European Patent Office
## Office européen des brevets

(19)

(11) Publication number: **0 044 378**
**A1**

(12)

# EUROPEAN PATENT APPLICATION

(21) Application number: **81103371.1**

(22) Date of filing: **05.05.81**

(51) Int. Cl.³: **C 09 D 11/00**
**C 09 D 11/10**

(30) Priority: **21.07.80 US 170343**

(43) Date of publication of application:
**27.01.82 Bulletin 82/4**

(84) Designated Contracting States:
**DE FR GB IT**

(71) Applicant: **International Business Machines
Corporation**

**Armonk, N.Y. 10504(US)**

(72) Inventor: **Cutler, Robert Steven
6125 Habitat Drive 1096
Boulder, Colorado 80301(US)**

(72) Inventor: **Fuller, Sterritt Ray, Jr.
Deer Trail Road
Boulder, Colorado 80302(US)**

(74) Representative: **Chaudhry, Mohammad Saeed
IBM United Kingdom Patent Operations Hursley Park
Winchester Hants, S021 2JN(GB)**

(54) **An ink composition for ink jet printers.**

(57) This invention relates to an ink jet composition for use in ink jet printers. The ink composition includes an aqueous solution of a copolymer of styrene and acrylic acid of a molecular weight of about 10,000 and in about a 2 to 1 ratio, a volatile base capable of solubilizing said copolymer and a dye which is compatible with said copolymer.

EP 0 044 378 A1

Croydon Printing Company Ltd.

AN INK COMPOSITION FOR INK JET PRINTERS

The present invention relates to an ink composition for use in ink jet printing devices.

Due to the often contradictory requirements imposed upon ink jet printing liquids, it has been generally recognized that no single ink should be expected to meet all requirements. Thus, prior inks have been formulated which print with widely varying print quality and archival properties on a limited number of substrates or papers.

To obtain high print quality on a wide variety of substrates for example absorptive papers, nonabsorptive papers and Mylar, it is necessary for the ink to set-up in its own matrix above the substrate's surface, minimizing penetration and spreading. A penetrating ink generally shows varying degrees of reduced density on absorptive substrates as the dye penetrates below the fibres. If the dye penetrates into the fibres across the substrate, feathering and poor print quality results. Adequate ink wettability of nonabsorptive substrates is necessary for high print quality.

To obtain improved archival properties, the ink must undergo an irreversible change as it dries; that is, it is thereafter insensitive to the presence of water. Although inks containing direct dyes, with penetrants or surfactants, exhibit some waterfastness on absorptive substrates, a reversible equilibria exists between dye, water and substrate, and therefore maximum waterfastness is not obtained. On nonabsorptive substrates, greatly reduced waterfastness is evident. Ideally, archival and reliability considerations require that dry ink can redissolve in the ink liquid itself, and yet that it is insoluble in water per se.

The prior art has recognized that the addition of resins to ink jet ink will improve the adhesion and longevity of the printed image formed by the ink. Also, it is known that the addition of surfactants will increase the rate of the ink's penetration into the recording surface and thereby reduce drying time.

U. S. Patents 3,687,887; 3,846,141 and 3,903,034 all deal with aqueous based ink jet ink systems which include a resinous binder constituent. In patent 3,687,887, this constituent is preferably a styrene-maleic anhydride copolymer type resin. Here it is stated that this resinous component can be extended by as much as 100 percent by the combination with other resinous materials such as the polyacrylic resin solution Joncryl 60 or any other water soluble resin compatible with the styrene-maleic anhydride resins. This patent also suggests the use of glycol ethers to act as a humectant to prevent drying of the ink in the jet orifice during normal down time, and to prevent flake-off of the ink image when printed on a photographic film base.

In U. S. Patent 3,846,141, inks of this general type are also described and polyethylene glycol is listed as an appropriate humectant. It is stated that this ink formulation can be modified to include a base such as ammonium hydroxide. As with the foregoing patent, a preservative such as Dioxin may be added to inhibit growth of bacteria.

U. S. Patent 3,903,034 suggests the use of Carbowax 200, a polyethylene glycol. U. S. Patent 3,870,528 deals with ink jet inks having absorptivity in the visible and near infrared regions, and suggests the use of sodium omadine as a fungicide or anti-bacterial agent, and Triton X-100 as a surfactant.

In U. S. Patent 3,945,836, a dye is especially synthesized to be soluble in a certain hydrocarbon, and styrenated alkyd resin is used to promote adhesion to the surface being marked with a marking pen.

3

U. S. Patent 4,072,644 suggests a water based printing ink having a polymeric additive, e.g., a styrene/maleimide interpolymer, which is water soluble and which gels when the water evaporates, to thereafter be water-insoluble.

. U. S. Patent 4,024,096 addresses the problem of an ink jet ink for use in printing onto glass or other glazed ceramic surfaces, and proposes the use of a novolac resinous binder and dyestuffs in an amount sufficient to give the desired colour intensity, usually in a concentration within the range of 0.4 to 5% by weight, and preferably 0.6 to 3% by weight of the ink composition. Both water and alcohol are used as liquid carrier, with water present in an amount up to 80% by weight, and preferably in an amount up to 50% by weight of the alcohol.

In the field of printing pastes for textile fibres, U. S. Patent 3,978,016 suggests the use of a latex thickener including a water-soluble copolymer consisting of an aqueous dispersion of a copolymer containing in interpolymerized form an ester which forms water-insoluble homopolymers, one or more monomers containing an ethylenic linkage and one or more polar groups, and one or more monomers containing several ethylenic linkages.

U. S. Patent 4,070,322 describes a ketone based ink jet ink which acts upon printed surfaces formed of synthetic resinous materials or plastics to cause softening or swelling whereby stronger and more permanent adhesion of the dried ink characters can be obtained to this printed surface. The presence of vinyl acetate copolymer is said to provide for improved adhesion.

U. S. Patent 3,053,814 deals with a composition of imides of isobutylene/maleic anhydride interpolymers useful as components in waxes, polishes, paints, etc. to form water insensitive films.

4

These compositions are said to be soluble in water containing ammonium hydroxide, but upon exposure to air and loss of ammonia the solution gels and the gel dries to water insoluble films. The imides are substantially linear polymers containing no appreciable amount of cross-linking.

According to the invention there is provided an ink composition for use in ink jet printers characterised in that the composition includes an aqueous solution of a copolymer of styrene and acrylic acid, a volatile base capable of solubilizing said copolymer and a dye which is compatible with said copolymer in that particles are not formed in the solution and in that said dye remains associated with said copolymer in the subsequent dry state.

While the prior art suggests the use of copolymers of styrene and acrylic acid in ink jet inks, these prior art teachings suggest only the use of those copolymers as extenders for a different, main binder polymer. We surprisingly have found that an ink jet ink whose sole binder constituent comprises a copolymer of styrene and acrylic acid provides the capability of ink jet printing on both absorbent and nonabsorbent substrates, where the printed characters have sharp edge definition, are optically dense, are waterfast, and retain these properties for long periods of time, and is much improved in these functional properties.

This invention provides a water based ink jet printing ink capable of producing high quality, high density images on a wide variety of substrates, while maintaining good archival properties. The ink formulation including water soluble dye, ammonia soluble acrylic binder, plasticizer, humectant, surfactant, biocide, chelating agent, and ammonium hydroxide produces an ink jet ink solution that is capable of being printed on a variety of substrates, both absorptive and nonabsorptive. This ink sets up in its own matrix, above the

5

substrate, and is waterfast and wet smear resistant upon setting. At the same time, this ink produces high quality, high density images.

It has been found that acrylic binders that are soluble in a base, such as ammonium hydroxide, and insoluble in water, when formulated with compatible dyes and fugitive amines, yield waterfast images on a variety of nonabsorptive and absorptive substrates.

The present invention requires a binder that is a copolymer of acrylic acid. The carboxylic acid group is an active group capable of being solubilized in the ink by a fugitive amine such as ammonia. The other binder constituent is a compound of a group such as styrene which helps insolubilize the copolymer of acrylic acid once the ink is printed and some of the amines are driven off. The resulting copolymer of styrene and acrylic acid is of a molecular weight about 10,000, and the styrene to acrylic acid proportion by weight is about 2 to 1. One such binder is Joncryl 67, a styrenated acrylic from S. C. Johnson Co. In general, the binder is used in amounts 3 to 15% by weight and preferably 8 to 11% by weight of the ink's composition.

A dye is used that is compatible with the binder. That is, the dye and binder, in certain ratios, are capable of forming waterfast, smear resistant images. Certain acid, basic, direct, solvent and polymer dyes are effective. The enhanced archival properties of the ink of the present invention are thought to be a result of one or more of the following: entrapment of the dye in the insolubilized polymer film; dye-to-polymer noncomplexed form of attraction; and/or the dye is complexed to the polymer. Examples of compatible dyes are Direct Black 19 (examples III and IV), Acid Black 2, Solvent Red 124 (example I), Basic Red 12 (example II) and Acid Blue 90. The amount of colourant used is dependent on its purity and dye strength, and is limited by its solubility. In general, the dye or mixture of dyes is used in amounts of 1/2 to 8% by weight.

6

In addition to dye and binder, the ink contains several selected materials. The binder requires a plasticizer in order to obtain good print. Also, the ink must contain an anti-crusting agent so the ink will not have unreasonable start-up problems or stream misdirection. A polyethylene glycol such as Union Carbide Carbowax 200 brand serves both as a plasticizer and anti-crusting agent and can be used in the proportion 3 to 12% by weight, preferably 4 to 10% by weight. Carbowax is a water soluble lubricant, a known solvent for dyes, resins and proteins, and a known plasticizer for special printing inks.

A surfactant can be used to adjust the surface tension so that smooth print is obtainable on a wide variety of substrates. The surface tension is adjusted to between about 30 to 40 dynes/cm. Triton GR5M, a water soluble surfactant from Rohm & Haas Co. which is dioctyl sodium sulfosuccinate is one example of an acceptable surfactant.

Appropriate fungicide or anti-bacterial agent(s), chelating agent(s), and solubilizing agent(s) may be used, and in general the type and amount will be dependent on the impurities in the ink and the dye solubility. Sodium omadine, a derivative of pyridinethione (sodium-2-pyridinethiol 1-oxide) having bactericide-fungicide properties is preferred, as is the organic chelating agent EDTA acid. NM2P (N-methyl-2-pyrrolidone) is used as a solubilizing agent.

The following four examples of formulations of ink jet ink embodying the present invention are given by way of illustration, and not by way of limitation. All percentages are by weight. Using the criteria of dye compatibility; that is, the dye and binder are capable of forming waterfast, smear resistant images, example IV is the preferred example for a black ink. Example I is a red ink, whereas example II is a magenta ink.

7

| I | Acetosol Fire Red 3GLS | 1.00% |
|---|---|---|
| | Joncryl 67 | 10.00% |
| | Carbowax 200 | 6.00% |
| | Na Omadine | .10% |
| | EDTA 4Na | .20% |
| | NM2P | 3.00% |
| | Conc. $NH_4OH$ (amine) | 2.50% |
| | Water | 77.20% |

| II | Astra Phloxine G | 1.00% |
|---|---|---|
| | Joncryl 67 | 8.00% |
| | Carbowax 200 | 6.00% |
| | Na Omadine | .10% |
| | EDTA 4Na | .20% |
| | Conc. $NH_4OH$ | 2.00% |
| | Water | 82.70% |

| III | Pyrazol Black N 200% | 5.00% |
|---|---|---|
| | Amafast Orange 4GLL | .88% |
| | Joncryl 67 | 10.00% |
| | Carbowax 200 | 9.00% |
| | Triton GR5M | .30% |
| | Na Omadine | .10% |
| | EDTA 4Na | .20% |
| | Conc. $NH_4OH$ | 5.00% |
| | Water | 69.52% |

8

| | | |
|---|---|---|
| IV | Carta Black BI | 3.99% |
| | Amafast Orange 4GLL | .84% |
| | Joncryl 67 | 10.00% |
| | Carbowax 200 | 8.00% |
| | Triton GR5M | .30% |
| | Na Omadine | .10% |
| | EDTA 4Na | .20% |
| | NM2P | 3.00% |
| | Conc. $NH_4OH$ | 6.00% |
| | Water | 67.57% |

While not critical to the present invention, in preparing the inks of examples I-IV, the Joncryl 67 was first dissolved in the ammonium hydroxide, and the remaining constituents were then added to the solutions. The resulting solution was stirred for a period of time to dissolve all solids. The ink was then filtered through a 0.2 micron filter.

All four inks were printed by ink jet techniques on coated nonabsorbent and uncoated absorbent papers. The resulting print characters were of high quality, had good waterfastness and good archival properties.

CLAIMS

1.  An ink composition for use in ink jet printers characterised in that the composition includes an aqueous solution of a copolymer of styrene and acrylic acid, a volatile base capable of solubilizing said copolymer and a dye which is compatible with said copolymer in that particles are not formed in the solution and in that said dye remains associated with said copolymer in the subsequent dry state.

2.  An ink composition according to Claim 1, in which said copolymer is a styrenated acrylic having a molecular weight of about 10,000, the proportion of styrene to acrylic acid by weight being 2 to 1.

3.  An ink composition according to claim 1 or 2, in which said base is ammonium hydroxide.

4.  An ink composition according to any one of claims 1 to 3, in which said dye is Direct Black 19, Acid Black 2, Solvent Red 124, Basic Red 12 or Acid Blue 90.

5.  An ink composition according to any one of the preceding claims, including a plasticizer, an anti-crusting agent, a chelating agent and a surfactant.

6.  An ink composition according to any one of the preceding claims, including 3 to 15% by weight of said copolymer.

**0044378**

European Patent Office

**EUROPEAN SEARCH REPORT**

Application number

EP 81 10 3371

| | DOCUMENTS CONSIDERED TO BE RELEVANT | | | CLASSIFICATION OF THE APPLICATION (Int Cl ) |
|---|---|---|---|---|
| Category | Citation of document with indication, where appropriate, of relevant passages | | Relevant to claim | |
| A | US - A - 4 136 076 (GEORGE R.E. DANIELS)<br><br>* Abstract; column 2, lines 1-13; column 2, table 1 *<br><br>-- | | 1,3,6 | C 09 D 11/00<br>11/10 |
| DA | US - A - 3 903 034 (DANIEL M. ZABIAK)<br><br>* Abstract; column 2, lines 53-56; column 3, lines 7-19; column 3, lines 33-36 *<br><br>-- | | 1,3-6 | |
| DA | US - A - 3 687 887 (DANIEL M. ZABIAK)<br><br>* Abstract; column 1, example 1 *<br><br>-- | | 1,3-6 | **TECHNICAL FIELDS SEARCHED (Int Cl )**<br><br>C 09 D 11/00<br>11/10 |
| P | GB - A - 2 053 948 (A.B. DICK)<br><br>* Abstract; page 2, lines 1-7 and 29-41 *<br><br>---- | | 1-6 | |

CATEGORY OF CITED DOCUMENTS

X: particularly relevant
A: technological background
O: non-written disclosure
P intermediate document
T theory or principle underlying the invention
E conflicting application
D document cited in the application
L citation for other reasons

& member of the same patent family corresponding document

The present search report has been drawn up for all claims

| Place of search | Date of completion of the search | Examiner |
|---|---|---|
| The Hague | 03-11-1981 | GIRARD |

EPO Form 1503.1   06.78